# FASCICULE DE BREVET EUROPEEN

(11) **EP 2 035 181 B1**
(45) Date de publication et mention de la délivrance du brevet: **09.12.2009**
(21) Numéro de dépôt: 07803903.9
(22) Date de dépôt: 20.06.2007
(51) Int. Cl.: B23P 19/06, B25B 29/02

(54) **DISPOSITIF DE TENSION DE TIGES FILETÉES.**
VORRICHTUNG ZUM SPANNEN VON GEWINDESTANGEN
DEVICE FOR TENSIONING THREADED RODS

(30) Priorité: 30.06.2006 FR 0605924
(43) Date de publication de la demande: 18.03.2009
(73) Titulaire: Aktiebolaget SKF, 415 50 Göteborg (SE)
(72) Inventeur: MONVILLE, Jean-Michel, F-78690 Les Essarts Le Roi (FR); LOISEAU, Valérie, F-78390 Bois D'arcy (FR); FAUS, José, F-75011 Paris (FR); ALEGRE, Marc, F-78310 Maurepas (FR)
(74) Mandataire: Dossmann, Gérard
(86) Numéro de dépôt international: PCT/FR2007/051478
(87) Numéro de publication internationale: WO 2008/000995

(56) Documents cités:
- WO-A-86/05135
- DE-U- 7 021 273
- FR-A- 2 841 304
- FR-A- 2 860 746
- US-A- 4 012 826

## Description

La présente invention concerne le domaine de la mise en tension d'une tige avant son blocage, notamment une tige filetée pouvant être bloquée par un écrou.

L'invention a pour objet un dispositif de tension de tiges filetées parallèles selon le préambule de la revendication 1. Un tel dispositif est décrit dans le document US-A-4 012 826.

La mise en tension peut s'effectuer par application d'un couple de serrage. Mais cette méthode présente certains inconvénients. En effet, en raison des frottements, constamment variables et qu'il est pratiquement impossible de déterminer de façon suffisamment précise, l'effort axial réel de précontrainte, pour un même couple de serrage, varie de façon très importante et sa connaissance est tout à fait aléatoire. De plus, des contraintes résiduelles de torsion, elles aussi variables et qui subsistent dans la tige filetée une fois serrée, viennent augmenter le niveau général de contrainte dans la tige. Enfin, les efforts de frottement importants générés par la méthode de serrage au couple peuvent provoquer la détérioration des états de surface au niveau des filets de la tige filetée et de l'écrou et des faces en contact entre l'écrou et la structure d'appui.

Le document FR 2 841 304 décrit un dispositif de mise en précontrainte d'une tige par application d'une tension axiale, accostage d'un écrou et relâchement de la tension axiale. Une plaque de support annulaire supporte six dispositifs répartis circonférentiellement.

Le document FR 2 860 746 décrit un dispositif d'implantation de tige filetée dans un trou taraudé à travers un actionneur annulaire de tension. Des actionneurs de tension peuvent être disposés sur une couronne à des hauteurs différentes pour pouvoir disposer des tiges filetées proches circonférentiellement et réaliser une mise en tension simultanée. Ce dispositif donne satisfaction dans le domaine des goujons de fixation des couvercles de cuve de réacteur nucléaire.

La demanderesse cherche à rapprocher les tiges filetées tout en diminuant leur grosseur. Ceci permet non seulement d'accroître la rigidité de l'assemblage mais également de diminuer les dimensions externes de l'assemblage, ce qui peut constituer un facteur important d'économie. Le problème est alors de réaliser la mise sous tension simultanée des tiges ainsi rapprochées, sachant qu'un tel mode de serrage permet d'une part une plus grande précision de serrage de chaque tige filetée et d'autre part une bien meilleure homogénéité de serrage entre toutes les tiges. Ces deux facteurs permettent une sécurité accrue au niveau de la tenue des assemblages boulonnés et donnent ainsi aux bureaux d'études une plus grande latitude pour optimiser le dimensionnement. De plus, par sa rapidité de mise en oeuvre et la réduction spectaculaire des temps opératoires, cette méthode est un facteur très important d'économie.

La présente invention a pour but de fournir un dispositif adapté à la mise en tension de tiges proches les unes des autres en vue d'une opération rapide et assurant une mise en tension simultanée et homogène d'une pluralité de tiges.

Le dispositif de tension de tiges filetées parallèles, comprend une pluralité d'actionneurs aptes à exercer un effort axial de tension. Chaque actionneur est associé à un tirant de transmission de l'effort axial de tension vers une extrémité d'une des tiges filetées. Le dispositif comprend une couronne inférieure et une couronne supérieure coaxiales. Une pluralité de chambres hydrauliques inférieures sont ménagées dans la couronne inférieure et une pluralité de chambres hydrauliques supérieures sont ménagées dans la couronne supérieure. Un piston annulaire d'actionneur est disposé dans chaque chambre hydraulique. La distance entre les axes de deux pistons voisins l'un disposé dans une chambre hydraulique inférieure et l'autre disposé dans une chambre hydraulique supérieure est inférieure au diamètre desdits pistons.

Dans un mode de réalisation, un trou pour le passage d'un tirant est ménagé dans la couronne inférieure entre deux chambres hydrauliques inférieures voisines et un trou pour le passage d'un tirant est ménagé dans la couronne supérieure entre deux chambres hydrauliques supérieures voisines. Le diamètre desdits trous est inférieur à 75%, préférablement 65%, du diamètre desdits pistons.

Dans un mode de réalisation, les chambres hydrauliques inférieures débouchent sur une face supérieure de la couronne inférieure et sont obturées au moins en partie par la couronne supérieure.

Dans un mode de réalisation, les chambres hydrauliques supérieures débouchent sur une face supérieure de la couronne supérieure et sont obturées au moins en partie par un capot. L'ensemble des capots peut être constitué d'une seule pièce annulaire venant coiffer tous les pistons et les ressorts de rappel de la couronne supérieure

Dans un mode de réalisation, des conduites hydrauliques sont ménagées dans la couronne inférieure pour l'alimentation des chambres hydrauliques inférieures et des conduites hydrauliques sont ménagées dans la couronne supérieure pour l'alimentation des chambres hydrauliques supérieures. Lesdites conduites hydrauliques peuvent être obtenues en ménageant deux trous en communication mutuelle et en communication chacun avec une chambre hydraulique. Pour des raisons de fabrication, les deux trous peuvent être ménagés à partir de la surface extérieure d'une couronne puis munis d'un bouchon à proximité de la surface extérieure de la couronne pour laisser subsister la communication entre deux chambres hydrauliques tout en évitant les fuites. Un ou deux trous pourront être munis d'un branchement en vue de l'amenée d'un fluide hydraulique sous pression à l'ensemble des chambres de la couronne concernée.

Dans un mode de réalisation, le dispositif comprend un fourreau de transmission de poussée entre le piston de chaque chambre hydraulique inférieure et le tirant correspondant. Le fourreau peut être disposé radialement entre le tirant et la couronne supérieure, et axialement entre le piston et une extrémité supérieure du tirant, par exemple munie d'un écrou.

Dans un mode de réalisation, le dispositif comprend une pluralité d'éléments d'appui disposés sous la couronne inférieure, autour d'une extrémité de chacune des tiges filetées et prévus pour reposer sur une surface d'appui. Un élément d'appui peut être muni d'un moyen de mise en rotation d'un écrou présent sur la tige filetée en vue de l'accostage de l'écrou, par exemple sous la forme d'une ouverture latérale permettant le passage d'un outil. Un élément d'appui peut être muni d'une douille prévue pour coopérer avec l'écrou et présentant une denture sur sa surface extérieure en vue d'engrener avec un engrenage d'entraînement en vue de l'accostage de l'écrou.

Dans un mode de réalisation, le dispositif comprend une couronne d'appui disposé sous la couronne inférieure, autour des extrémités des tiges filetées et prévue pour reposer sur une surface d'appui. La couronne d'appui permet de réduire le nombre d'éléments mis en oeuvre d'où un gain de temps.

Dans un mode de réalisation, le dispositif comprend un mécanisme d'entraînement en rotation d'un écrou disposé sur une extrémité de tige filetée.

Dans un mode de réalisation, le mécanisme d'entraînement en rotation comprend un limiteur de couple. On obtient ainsi une excellente maîtrise du couple d'accostage et on améliore encore la précision et l'homogénéité de la précontrainte dans les tiges.

Dans un mode de réalisation, le mécanisme d'entraînement en rotation est capable d'entraîner une pluralité d'écrous. Le mécanisme d'entraînement en rotation peut comprendre une pluralité de sous ensembles à limitation de couple chacun entraînant un écrou. Les sous-ensembles à limitation de couple peuvent être entraînés en rotation de façon simultanée par une couronne munie de dentures ou de dispositifs de friction. On assure ainsi un accostage simultané et maîtrisé des écrous, d'où un important gain de temps de montage et de contrôle.

Dans un mode de réalisation, un tirant comprend un corps allongé et un écrou de réaction vissé à l'extrémité supérieure du tirant, l'écrou de réaction recevant l'appui du piston ou d'un fourreau de transmission de poussée. Le tirant peut comprendre une extrémité inférieure en prise avec une tige filetée, le corps allongé traversant les couronnes inférieure et extérieure.

Le dispositif est bien adapté à la fixation de couvercles de chaudières et de bagues de grandes dimensions, notamment de bagues de roulements de grand diamètre, par exemple du type décrit dans le document FR 2 677 719. Les roulements de grand diamètre peuvent servir dans des éoliennes pour supporter la nacelle orientable, le moyeu tournant ou encore une pale pivotante.

Grâce à l'invention, on assure de façon rapide et sûre la fixation de pièces annulaires par des tiges, des goujons ou des boulons.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en perspective d'un dispositif selon un mode de réalisation;
- la figure 2 est une demi-vue en coupe axiale du dispositif de la figure 1;
- la figure 3 est une autre demi-vue en coupe axiale du dispositif de la figure 1;
- la figure 4 est une vue de dessus d'une couronne supérieure du dispositif de la figure 1;
- la figure 5 est une vue en perspective d'une couronne inférieure du dispositif de la figure 1; et
- la figure 6 est une vue de dessus d'un élément d'appui du dispositif de la figure 1.

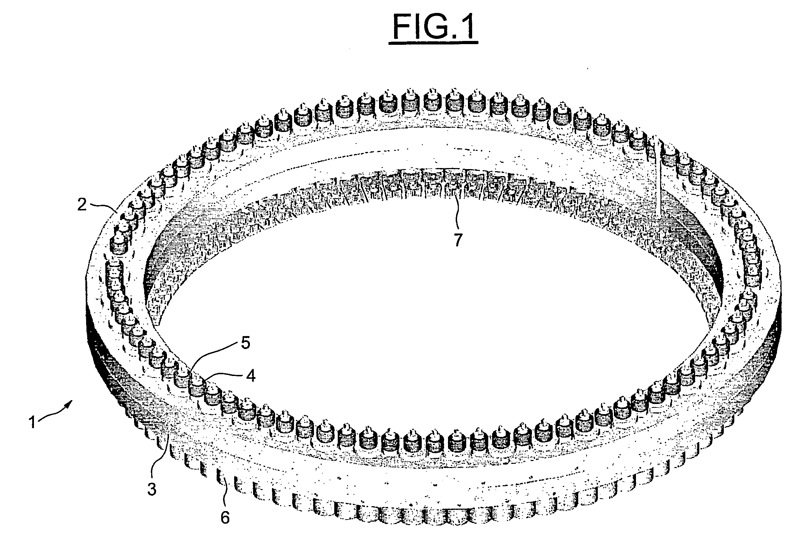

Tel qu'illustré sur la figure 1, la couronne de serrage hydraulique 1 comprend une couronne supérieure 2, une couronne inférieure 3, une pluralité de premiers actionneurs 4 et une pluralité de deuxièmes actionneurs 5. Les couronnes 2 et 3 sont concentriques et superposées, la surface inférieure de la couronne supérieure 2 étant en contact avec la surface supérieure de la couronne inférieure 3. Les premiers actionneurs 4 et les deuxièmes actionneurs 5 sont disposés de façon alternée circonférentiellement au sein des couronnes 2 et 3, sensiblement à équidistance entre le bord extérieur et le bord intérieur desdites couronnes 2 et 3. Les actionneurs 4 et 5 sont parallèles les uns aux autres et parallèles à l'axe des couronnes 2 et 3.

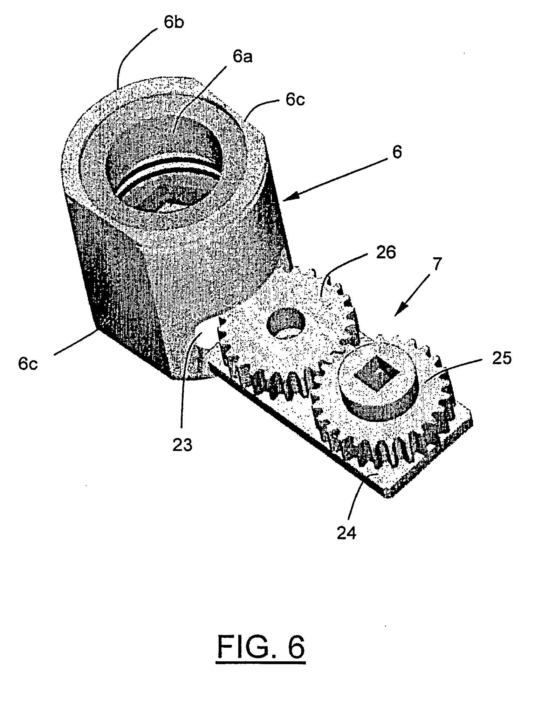

De façon optionnelle, la couronne de serrage 1 est munie d'une pluralité d'éléments d'appui 6, illustré plus en détail sur la figure 6, et associée à un mécanisme d'entraînement en rotation 7.

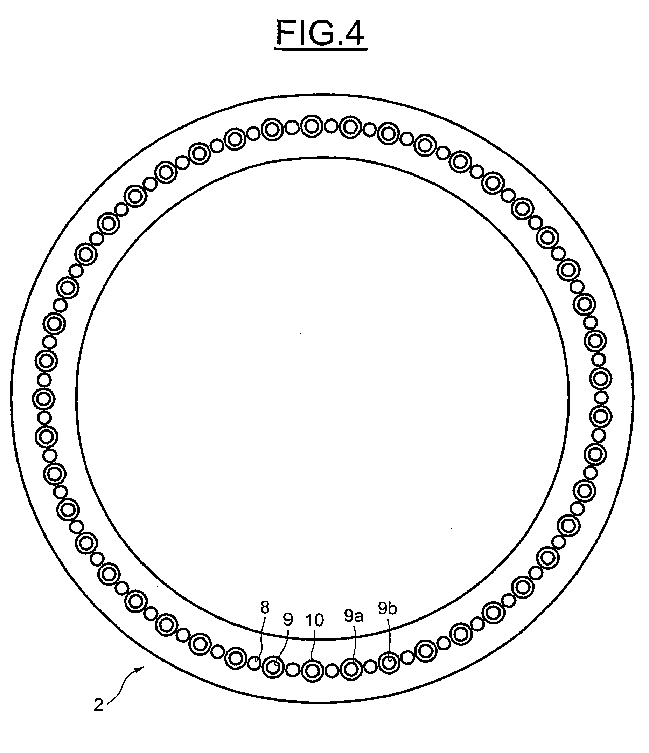

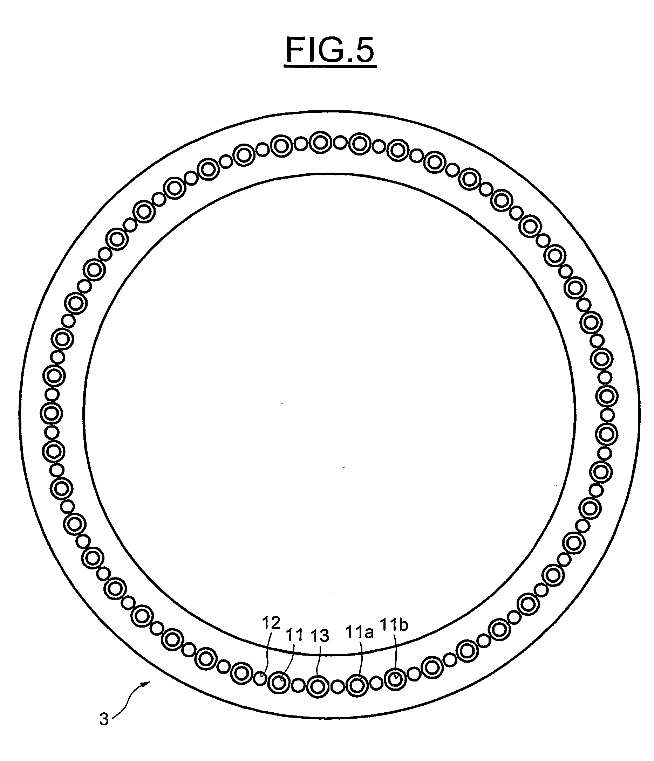

Comme on le voit plus en détail sur les figures 4 et 5, les couronnes supérieure 2 et inférieure 3 présentent une configuration proche l'une de l'autre, voire identique. La couronne supérieure 2 présente une face supérieure et une face inférieure parallèles. Une pluralité de premiers trous 8, de diamètre constant, et une pluralité de deuxièmes trous 9 sont ménagés dans la couronne supérieure 2 d'une face à l'autre. Les premiers trous 8 et les deuxièmes trous 9 sont alternés circonférentiellement. Les deuxièmes trous 9 présentent un épaulement 10 sensiblement à mi-hauteur de la couronne supérieure 2. Les deuxièmes trous 9 présentent donc une partie supérieure 9a de grand diamètre et une partie inférieure 9b de petit diamètre sensiblement identique au diamètre des premiers trous 8. L'épaulement 10 est parallèle aux faces inférieure et supérieure de la couronne. Les trous 8 et 9 sont parallèles à l'axe de la couronne supérieure 2.

La couronne inférieure 3 comprend une pluralité de premiers trous 11, de configuration semblable à celle des deuxièmes trous 9 de la couronne supérieure 2 et une pluralité de deuxièmes trous 12, de configuration similaire à celle des premiers trous 8 de la couronne supérieure 2. Les premiers trous 11 présentent une partie supérieure 11 a de grand diamètre et une partie inférieure 11b de petit diamètre reliées par un épaulement 13.

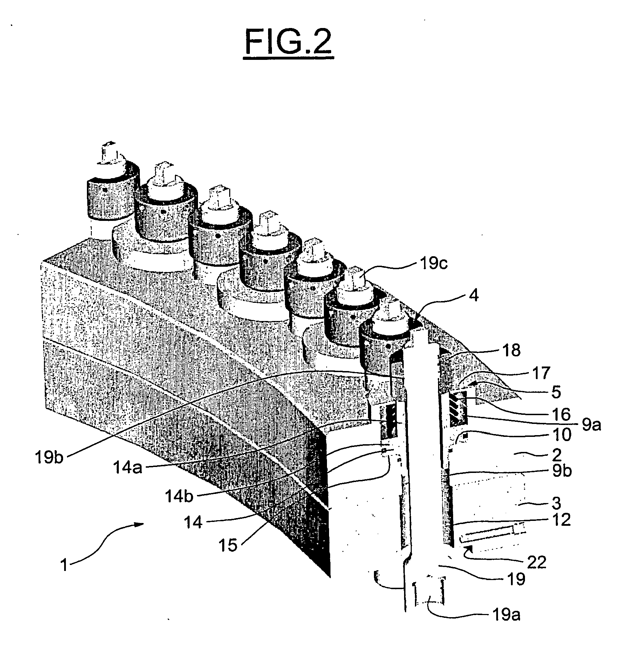

Sur la figure 2, est illustré plus en détail la structure d'un deuxième actionneur 5 disposé dans un deuxième trou 9 de la couronne supérieure 2 et dans un deuxième trou 12 de la couronne inférieure 3.

Le deuxième actionneur 5 comprend un piston annulaire 14 présentant une partie allongée axialement en forme de manchon 14a à proximité de son alésage et une partie étendue radialement vers l'extérieur en forme de collerette radiale 14b. Le piston 14 est disposé dans la partie supérieure 9a du deuxième trou 9 de la couronne supérieure 2 pour la plus grande partie tout en étant légèrement en saillie dans la partie inférieure 9b du trou 9 et au-delà de la surface supérieure de la couronne supérieure 2. Le piston 14 forme avec la couronne 2 une chambre hydraulique annulaire 15 à l'interface entre l'épaulement 10 et la partie radiale 14b. Un ressort 16 est disposé sur la surface supérieure de la partie radiale 14b autour du manchon 14a. Un capot 17 est fixé sur la surface supérieure de la couronne supérieure 2 et est en contact avec l'extrémité du ressort 16 opposée à la partie radiale 14b tout en présentant un passage central pour le manchon 14a. Dans un mode de réalisation, l'ensemble des capots 17 de la couronne supérieure peuvent être constitués d'une seule pièce annulaire venant coiffer tous les pistons 14 et des ressorts de rappel 16.

Le deuxième actionneur 5 comprend également un écrou de réaction 18 et un tirant 19. Le tirant 19 se présente sous la forme d'une tige allongée axialement disposée dans l'alésage du piston 14 et passant également dans la partie inférieure 9b du deuxième trou 9 de la couronne supérieure 2 et dans le deuxième trou 12 de la couronne inférieure 3, tout en étant en saillie à une extrémité au-delà du piston 14 et du capot 17 et à l'extrémité opposée au-delà de la face inférieure de la couronne inférieure 3. Le tirant 19 comprend à son extrémité inférieure un trou taraudé 19a capable de venir en prise par vissage avec une tige filetée que l'on souhaite mettre en tension et à son extrémité supérieure une portion filetée 19b et une portion d'entraînement 19c, par exemple un carré ou un hexagone au-delà de la portion filetée 19. L'écrou de réaction 18 est vissé sur la portion taraudée 19b du tirant 19 et vient en contact avec la surface annulaire radiale d'extrémité supérieure du manchon 14a du piston 14.

Ainsi, le piston 14, représenté en position de repos sur la figure 2, est capable d'entraîner l'écrou de réaction 18 vers le haut, lui-même entraînant le tirant 19. Le retour en position de repos peut être assuré par l'effort exercé par le ressort 16 entre le capot 17 et le piston 14. Le tirant 19 traverse la couronne inférieure 3 en occupant un espace circonférentiel extrêmement réduit de ladite couronne inférieure 3 grâce au deuxième trou 12 qui présente un petit diamètre, nettement inférieur au diamètre de la chambre hydraulique et de la partie supérieure de grand diamètre 9a du deuxième trou 9 de la couronne supérieure 2.

L'actionneur 4 présente une structure semblable à celle de l'actionneur 5, à ceci près qu'un manchon de transmission d'effort 20 est interposé entre l'extrémité supérieure du piston 14 et l'écrou de réaction 18. La longueur du manchon 20 peut être sensiblement égale à la hauteur de la couronne supérieure 2. Le piston 14 est disposé pour l'essentiel dans la partie de grand diamètre 11a du premier trou 11 de la couronne inférieure 3, la partie de manchon 14a du piston 14 s'étendant en saillie vers le bas dans la partie de petit diamètre 11b du premier trou 11 de la couronne inférieure 3 et dans le premier trou 8 de la couronne supérieure 2. Le ressort 16 est disposé entre la partie radiale 14b du piston 14 et une surface radiale de la couronne supérieure 2. Le premier trou 8 de la couronne supérieure 2 présente un diamètre suffisant pour laisser le passage à la partie formant manchon 14a du piston 14. Le premier trou 8 peut donc présenter un diamètre légèrement supérieur à celui du deuxième trou 12 de la couronne inférieure 3.

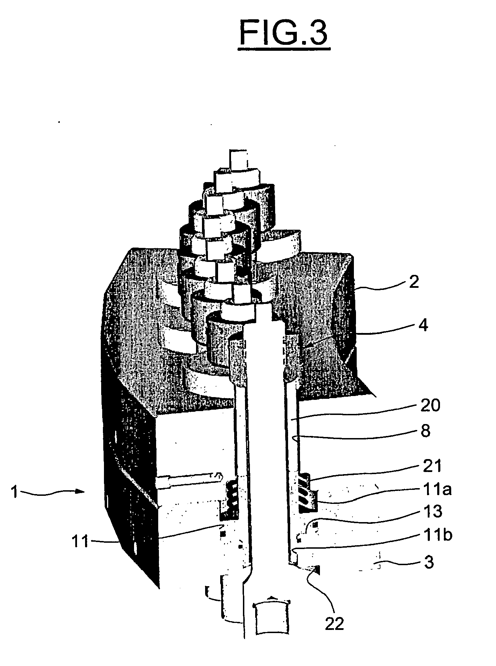

Dans le mode de réalisation illustré sur la figure 3, l'on remarque que la couronne supérieure 2 est pourvue d'une entrée 21 de trou 8 de diamètre légèrement plus élevé et dans laquelle une partie du ressort 16 est logée. Alternativement, on pourrait prévoir un premier trou 8 cylindrique. De même, la partie inférieure de petit diamètre 11b du premier trou 11 de la couronne inférieure 3 présente une entrée 22 sur sa face inférieure, offrant un diamètre plus élevé. L'entrée 22 permet un positionnement plus aisé des éléments d'appui 6 illustrés sur les figures 1 et 6.

Comme on peut le remarquer sur les figures 4 et 5, l'espace circonférentiel séparant un premier trou 8 de la partie de grand diamètre 9a d'un second trou 9 dans la couronne supérieure 2 et la partie supérieure 11 a d'un premier trou 11 d'un second trou 12 dans la couronne inférieure 3 est extrêmement réduit, d'où la possibilité d'installer un grand nombre d'actionneurs 4 et 5 sur les couronnes 2 et 3 et d'exercer un effort élevé et bien réparti.

Avantageusement, les chambres hydrauliques 15 de l'ensemble des actionneurs 4 et 5 d'une couronne de serrage 1 sont reliées par des conduites hydrauliques ménagées dans les couronnes 2 et 3, d'où une alimentation simultanée en fluide hydraulique de l'ensemble des chambres hydrauliques 15 et la possibilité d'exercer le même effort par l'ensemble des actionneurs, et la possibilité de soumettre à la même précontrainte de traction un grand nombre de tiges disposées en couronne, par exemple des tiges filetées de fixation d'une bague de roulement d'orientation de grand diamètre. Les couronnes 2 et 3 forment les cylindres des actionneurs 4 et 5, coopérant avec les pistons respectifs 14. Les couronnes 2 et 3 offrent une robustesse et une rigidité très élevées tout en permettant le serrage d'un grand nombre de tiges, ce qui permet d'une part d'augmenter le nombre de tiges à serrer sur un dispositif de même diamètre, d'où un meilleur serrage et, d'autre part, de réaliser la mise en tension en une seule passe, l'ensemble des tiges étant mis en traction simultanément, ce qui assure une fiabilité extrêmement élevée de la mise en tension et par conséquent des caractéristiques mécaniques supérieures, notamment, en termes de durée de vie pour un roulement de grand diamètre, ou encore en termes d'étanchéité pour un couvercle, par exemple un couvercle de chaudière.

L'élément d'appui 6, visible sur les figures 1 et 6, est prévu pour être disposé entre la face inférieure de la couronne inférieure 3 et la surface supérieure d'un dispositif à serrer. L'élément d'appui 6 comprend un manchon de construction suffisamment robuste pour résister à la compression due au fluide hydraulique sous pression introduit dans les chambres hydrauliques 15. L'élément d'appui 6 présente un alésage circulaire 6a et une surface extérieure 6b circulaire tronquée par deux méplats 6c sensiblement diamétralement opposés. Avantageusement, le diamètre de l'entrée inférieure 22 des trous 11 et 12 de la couronne inférieure 3 est légèrement supérieur au diamètre de l'élément d'appui 6.

De préférence, l'entrée 22 est également pourvue de deux méplats, non représentés, correspondant sensiblement aux méplats 6c de l'élément d'appui 6 pour permettre une orientation de l'élément d'appui 6 par rapport à la couronne inférieure 3 et un blocage en rotation de l'élément d'appui 6 par rapport à ladite couronne inférieure 3. On facilite de la sorte le positionnement du mécanisme d'entraînement 7 vers l'intérieur de la couronne 1, comme illustré sur la figure 1. Une fenêtre 23 est ménagée dans la paroi de l'élément d'appui 6, à proximité de son extrémité inférieure, à partir de la surface cylindrique 6b. Le mécanisme d'entraînement 7 est disposé en partie dans ladite fenêtre 23.

Le mécanisme d'entraînement 7 peut être fixé sur l'élément d'appui 6 et comprend une platine 24 supportant deux engrenages 25 et 26, en prise l'un avec l'autre, et prévus pour entraîner un écrou de blocage d'une tige filetée, non visible sur les figures, car recouvert par l'élément d'appui 6. L'écrou de blocage peut présenter une denture extérieure ou encore une surface extérieure polygonale sur laquelle on vient disposer une interface en forme de couronne présentant une surface intérieure polygonale correspondante et une denture extérieure pour engrener avec l'engrenage 26. Les mécanismes d'entraînement 7 sont disposés en saillie vers l'intérieur de la couronne de serrage 1 et peuvent ainsi être entraînés simultanément ou non par un entraînement commun, par exemple sous la forme d'une roue dentée creuse de grand diamètre engrenant avec l'engrenage 25 ou encore sous la forme d'un entraînement individuel se déplaçant d'un mécanisme 7 à l'autre pour assurer un léger couple d'accostage de l'écrou sur la surface sur laquelle il vient en contact.

Grâce à l'invention, on réalise la mise en tension simultanée d'un grand nombre de tiges dont les axes peuvent être rapprochés, d'où la possibilité d'augmenter le nombre de tiges, ce qui est particulièrement intéressant pour la robustesse et la tenue des pièces à serrer. Ceci permet également une réduction des dimensions de l'assemblage fort utile aux bureaux d'études dans leur recherche des économies de poids et de matière. L'accostage des écrous coopérant avec lesdites tiges mises sous tension peut être effectué de façon simultanée ou séquentielle, de préférence automatisée, immédiatement après la mise sous tension. On procède ensuite au relâchement de la traction exercée par les actionneurs 4 et 5. On vient ensuite dévisser les tirants 19 par rotation grâce au carré d'entraînement 19c. On peut ensuite retirer la couronne dé serrage 1, puis les éléments d'appui 6.

Dans une variante, les éléments d'appui 6 sont reliés mutuellement les uns aux autres et forment ainsi une couronne d'appui monobloc que l'on vient disposer préalablement à la couronne d'appui 1. Lors de l'installation de la couronne d'appui 1, on pose d'abord les éléments d'appui 6 ou la couronne d'appui regroupant les éléments d'appui 6, puis la couronne de serrage 1. On procède ensuite à la mise en rotation des tirants 19 pour venir en prise avec l'extrémité supérieure des tiges filetées à tendre, puis on alimente le circuit hydraulique, d'où un déplacement des pistons 14, des écrous de réaction 18 et des tirants 19 vers le haut assurant la mise en tension des tiges devant être tendues.

## Revendications

1. Dispositif de tension (1) de tiges filetées parallèles, comprenant une pluralité d'actionneurs (4, 5) aptes à exercer un effort axial de tension, chaque actionneur (4, 5) étant associé à un tirant (19) de transmission de l'effort axial de tension vers une extrémité d'une des tiges filetées, **caractérisé par le fait qu'**il comprend une couronne inférieure (3) et une couronne supérieure (2) coaxiales, une pluralité de chambres hydrauliques inférieures étant ménagées dans la couronne inférieure et une pluralité de chambres hydrauliques supérieures étant ménagées dans la couronne supérieure, un piston annulaire (14) d'actionneur étant disposé dans chaque chambre hydraulique (15), la distance entre les axes de deux pistons voisins, l'un disposé dans une chambre hydraulique inférieure et l'autre disposé dans une chambre hydraulique supérieure, étant inférieure au diamètre desdits pistons.

2. Dispositif selon la revendication 1, dans lequel un trou (12) pour le passage d'un tirant (19) est ménagé dans la couronne inférieure (3) entre deux chambres hydrauliques inférieures voisines et un trou (8) pour le passage d'un tirant est ménagé dans la couronne supérieure (2) entre deux chambres hydrauliques supérieures voisines.

3. Dispositif selon l'une quelconque des revendications précédentes, dans lequel les chambres hydrauliques inférieures débouchent sur une face supérieure de la couronne inférieure (3) et sont obturées au moins en partie par la couronne supérieure (2).

4. Dispositif selon l'une quelconque des revendications précédentes, dans lequel les chambres hydrauliques supérieures débouchent sur une face supérieure de la couronne supérieure (2) et sont obturées au moins en partie par un capot (17).

5. Dispositif selon la revendication 4, dans lequel l'ensemble des capots (17) est constitué d'une seule pièce annulaire venant coiffer tous les pistons et les ressorts de rappel de la couronne supérieure.

6. Dispositif selon l'une quelconque des revendications précédentes, dans lequel des conduites hydrauliques sont ménagées dans la couronne inférieure (3) pour l'alimentation des chambres hydrauliques inférieures et des conduites hydrauliques sont ménagées dans la couronne supérieure (2) pour l'alimentation des chambres hydrauliques supérieures.

7. Dispositif selon l'une quelconque des revendications précédentes, comprenant un fourreau (20) de transmission de poussée entre le piston (14) de chaque chambre hydraulique inférieure et le tirant (19) correspondant.

8. Dispositif selon l'une quelconque des revendications précédentes, comprenant une pluralité d'éléments d'appui (6) disposés sous la couronne inférieure (3), autour d'une extrémité de chacune des tiges filetées et prévus pour reposer sur une surface d'appui.

9. Dispositif selon l'une quelconque des revendications 1 à 7, comprenant une couronne d'appui disposée sous la couronne inférieure, autour des extrémités des tiges filetées et prévue pour reposer sur une surface d'appui.

10. Dispositif selon l'une quelconque des revendications précédentes, comprenant un mécanisme (7) d'entraînement en rotation d'un écrou disposé sur une extrémité de tiges filetée.

11. Dispositif selon la revendication 10, dans lequel le mécanisme d'entraînement en rotation comprend un limiteur de couple.

12. Dispositif selon la revendication 10 ou 11, dans lequel le mécanisme d'entraînement en rotation est capable d'entraîner une pluralité d'écrous.

13. Dispositif selon l'une quelconque des revendications précédentes, dans lequel un tirant (19) comprend un corps allongé et un écrou de réaction (18) vissé à l'extrémité supérieure du tirant, l'écrou de réaction (18) recevant l'appui du piston ou d'un fourreau de transmission de poussée.

## Claims

1. Device (1) for tensioning parallel threaded rods, comprising a plurality of actuators (4, 5) capable of exerting an axial tensile force, each actuator (4, 5) being associated with a tension rod (19) for transmitting axial tensile force to one end of one of the threaded rods, **characterized in that** it comprises a lower crown (3) and an upper crown (2) which are coaxial, a plurality of lower hydraulic chambers being formed in the lower crown and a plurality of upper hydraulic chambers being formed in the upper crown, an annular actuating piston (14) being arranged in each hydraulic chamber (15), the distance between the axes of two adjacent pistons, one being arranged in a lower hydraulic chamber and the other being arranged in an upper hydraulic chamber, being less than the diameter of said pistons.

2. Device according to Claim 1, in which a hole (12) for the passage of a tension rod (19) is formed in the lower crown (3) between two adjacent lower hydraulic chambers and a hole (8) for the passage of a tension rod is formed in the upper crown (2) between two adjacent upper hydraulic chambers.

3. Device according to either of the preceding claims, in which the lower hydraulic chambers open onto an upper face of the lower crown (3) and are sealed at least partially by the upper crown (2).

4. Device according to any one of the preceding claims, in which the upper hydraulic chambers open onto an upper face of the upper crown (2) and are sealed at least partially by a cap (17).

5. Device according to Claim 4, in which the series of caps (17) consists of a single annular part capping all the pistons and return springs of the upper crown.

6. Device according to any one of the preceding claims, in which hydraulic pipes are formed in the lower crown (3) for supplying the lower hydraulic chambers and hydraulic pipes are formed in the upper crown (2) for supplying the upper hydraulic chambers.

7. Device according to any one of the preceding claims, comprising a sleeve (20) for transmitting thrust between the piston (14) of each lower hydraulic chamber and the corresponding tension rod (19).

8. Device according to any one of the preceding claims, comprising a plurality of bearing elements (6) arranged below the lower crown (3) around one end of each of the threaded rods and provided to rest on a bearing surface.

9. Device according to any one of Claims 1 to 7, comprising a bearing ring arranged below the lower crown, around the ends of the threaded rods and provided to rest on a bearing surface.

10. Device according to any one of the preceding claims, comprising a mechanism (7) for driving in rotation a nut arranged on one end of the threaded rods.

11. Device according to Claim 10, in which the mechanism for driving in rotation comprises a torque limiter.

12. Device according to Claim 10 or 11, in which the mechanism for driving in rotation is capable of driving a plurality of nuts.

13. Device according to any one of the preceding claims, in which a tension rod (19) comprises an elongated body and a reaction nut (18) screwed to the upper end of the tension rod, the reaction nut (18) supporting the piston or a sleeve for transmitting thrust.

## Patentansprüche

1. Vorrichtung (1) zum Spannen von parallelen Gewindestangen, die eine Vielzahl von Aktuatoren (4, 5) aufweist, die in der Lage sind, eine axiale Spannkraft auszuüben, wobei jeder Aktuator (4, 5) mit einer Stange (19) zur Übertragung der axialen Spannkraft auf ein Ende einer der Gewindestangen in Verbindung steht, **dadurch gekennzeichnet, dass** sie koaxial einen unteren Kranz (3) und einen oberen Kranz (2), eine Vielzahl unterer Hydraulikkammern, die in dem unteren Kranz angeordnet sind, und eine Vielzahl oberer Hydraulikkammern aufweist, die in dem oberen Kranz angeordnet sind, wobei ein ringförmiger Kolben (14) des Aktuators in jeder Hydraulikkammer (15) angeordnet ist und der Abstand zwischen den Achsen zweier benachbarter Kolben, von denen der eine in einer unteren Hydraulikkammer angeordnet ist und der andere in einer oberen Hydraulikkammer angeordnet ist, kleiner als der Durchmesser der Kolben ist.

2. Vorrichtung nach Anspruch 1, bei welcher ein Loch (12) für den Durchtritt einer Stange (19) zwischen zwei benachbarten unteren Hydraulikkammern in dem unteren Kranz (3) angeordnet ist und ein Loch (8) für den Durchtritt einer Stange zwischen zwei benachbarten oberen Hydraulikkammern in dem oberen Kranz (2) angeordnet ist.

3. Vorrichtung nach einem der vorhergehenden Ansprüche, bei welcher die unteren Hydraulikkammern in eine obere Fläche des unteren Kranzes (3) münden und wenigstens teilweise durch den oberen Kranz (2) verschlossen sind.

4. Vorrichtung nach einem der vorhergehenden Ansprüche, bei welcher die oberen Hydraulikkammern in eine obere Fläche des oberen Kranzes (2) münden und wenigstens teilweise durch einen Deckel (17) verschlossen sind.

5. Vorrichtung nach Anspruch 4, bei welcher die Gesamtheit der Deckel (17) durch ein einziges Ringteil gebildet ist, das Kolben und Rückstellfedern des oberen Kranzes abdeckt.

6. Vorrichtung nach einem der vorhergehenden Ansprüche, bei welcher in dem unteren Kranz (3) Hydraulikleitungen zur Versorgung der unteren Hydraulikkammern angeordnet sind und in dem oberen Kranz (2) Hydraulikleitungen zur Versorgung der oberen Kammern angeordnet sind.

7. Vorrichtung nach einem der vorhergehenden Ansprüche, die eine Hülse (20) zur Übertragung von Schubkraft zwischen dem Kolben (14) jeder unteren Hydraulikkammer und der dazu gehörenden Stange (19) aufweist.

8. Vorrichtung nach einem der vorhergehenden Ansprüche, die eine Vielzahl Halteelemente (6) aufweist, die unter dem unteren Kranz (3) nahe eines Endes jeweils einer der Gewindestangen angeordnet sind und zum Abstützen auf einer Haltefläche vorgesehen sind.

9. Vorrichtung nach einem der Ansprüche 1 bis 7, die einen Haltekranz aufweist, der unter dem unteren Kranz nahe der Enden der Gewindestangen vorgesehen ist und zum Abstützen auf einer Haltefläche vorgesehen ist.

10. Vorrichtung nach einem der vorhergehenden Ansprüche, die einen Drehantriebsmechanismus (7) für einen Mutter aufweist, die an einem Ende einer Gewindestange angeordnet ist.

11. Vorrichtung nach Anspruch 10, bei welcher der Drehantriebsmechanismus einen Drehmomentbegrenzer aufweist.

12. Vorrichtung nach Anspruch 10 oder 11, bei welcher der Drehantriebsmechanismus fähig ist, eine Vielzahl Muttern anzutreiben.

13. Vorrichtung nach einem der vorhergehenden Ansprüche, bei welcher eine Stange (19) einen länglichen Körper und eine Reaktionsmutter (18) aufweist, die auf ein oberes Ende der Stange aufgeschraubt ist, wobei die Reaktionsmutter (18) den Halt des Kolbens oder einer Hülse zur Schubübertragung übernimmt.
